# EUROPEAN PATENT SPECIFICATION

(11) **EP 3 533 624 B1**
(45) Date of publication and mention of the grant of the patent: **07.07.2021**
(21) Application number: 17865354.9
(22) Date of filing: 02.10.2017
(51) Int. Cl.: B60C 11/03, B60C 11/13

(54) **PNEUMATIC TIRE**
LUFTREIFEN
PNEU

(30) Priority: 26.10.2016 JP 2016209787
(43) Date of publication of application: 04.09.2019
(73) Proprietor: The Yokohama Rubber Co., Ltd., Minato-ku Tokyo 105-8685 (JP)
(72) Inventor: TAMURA, Masashi, Hiratsuka-shi Kanagawa 254-8601 (JP)
(74) Representative: Dilg, Haeusler, Schindelmann Patentanwaltsgesellschaft mbH
(86) International application number: PCT/JP2017/035825
(87) International publication number: WO 2018/079201

(56) References cited:
- EP-A1- 2 612 769
- WO-A1-2013/014897
- DE-A1- 19 548 733
- JP-A- 2001 322 408
- JP-A- 2002 248 906
- JP-A- 2003 011 617
- JP-A- 2010 116 096
- JP-A- 2012 051 502

## Description

### Technical Field

The present invention relates to a pneumatic tire.

### Background Art

In a pneumatic tire, a plurality of grooves are formed in a tread surface for the purpose of, for example, drainage of water between the tread surface and a road surface when driving on wet road surfaces. However, the grooves in the tread surface cause uneven wear and degradation of riding comfort. Thus, some known pneumatic tires suppress uneven wear and secure riding comfort by devising the shape and arrangement of the grooves.

For example, in a pneumatic tire described in Patent Document 1, drainage performance and wear resistance performance are improved in a well-balanced manner by specifying a groove width, a land ratio of predetermined regions, and a groove angle of a so-called block pattern. Further, in a pneumatic tire described in Patent Document 2 provides that run-flat performance is improved without a decrease in ride comfort and drainage performance by specifying a land ratio, a groove width of a predetermined region, and a ratio of groove widths of grooves in a block pattern. Further, in a pneumatic tire described in Patent Document 3, wet performance and wear resistance performance are improved in a well-balanced manner by specifying a ratio of groove widths of predetermined regions in a block pattern. Further, in a pneumatic tire described in Patent Document 4, wet performance and uneven wear resistance performance are improved in a well-balanced manner by specifying a shape of a main groove, an inclination direction of a lateral groove, and a shape of the lateral groove in a block pattern having a designated rotation direction. Further, a pneumatic tire described in Patent Document 5 is designed to suppress noise and prevent uneven wear by specifying the configuration of a circumferential groove and a lateral groove in a block pattern.

### Citation List

### Patent Literature

Patent Document 1: JP 2014-125109 A
Patent Document 2: JP 2014-94683 A
Patent Document 3: JP 2015-74247 A
Patent Document 4: JP 2015-116845 A
Patent Document 5: JP 2010-116096 A

Other prior art is known from JP 2012 051502 A and JP 2010 116096 A.

### Summary of Invention

### Technical Problem

In recent years, there has been a demand to reduce pass-by noise that is generated from a ground contact region of a pneumatic tire during driving of a vehicle. The pass-by noise is liable to be increased in such manner where hitting sound of a tread surface brought into contact with the ground passes through lug grooves, extends in a tire lateral direction, to an outer side in the tire lateral direction. Thus, the pass-by noise can be suppressed to a certain extent by limiting a groove width and a groove depth of the lug grooves and reducing a capacity of the lug grooves. However, the lug grooves contribute to drainage performance. A reduced capacity of the lug grooves leads to degradation of drainage performance, and also leads to degradation of wet performance, which is driving performance such as traction performance on a wet road surface. Thus, it is extremely difficult to avoid degradation of wet performance and suppress noise at the same time.

In light of the foregoing, an object of the present invention is to provide a pneumatic tire capable of maintaining wet performance and suppressing noise at the same time.

### Solution to Problem

To solve the problems described above and achieve the object described above, a pneumatic tire according to an embodiment of the present invention has a designated rotation direction and includes:
a plurality of circumferential main grooves formed in a tread surface and extending in a tire circumferential direction;
a plurality of lug grooves formed in the tread surface and extending in a tire lateral direction; and
a plurality of blocks, each of the plurality of blocks being defined on both sides in the tire circumferential direction by the plurality of lug grooves and comprising at least one end in the tire lateral direction defined by the plurality of circumferential main grooves; wherein
the plurality of circumferential main grooves are repeatedly bent and oscillate in the tire lateral direction while extending in the tire circumferential direction;
the plurality of lug grooves, which are connected to the plurality of circumferential main grooves from both sides in the tire lateral direction, are located at different positions in the tire circumferential direction;
a relationship between a distance Lf and a distance Lb is within a range of 1.1 ≤ (Lb/Lf) ≤ 1.2, where
a cross circumferential main groove is one of the plurality of circumferential main grooves which forms a cross portion at which the plurality of lug grooves is connected to the plurality of circumferential main grooves from an inner side in the tire lateral direction;
a cross lug groove is one of the plurality of lug grooves which forms the cross portion;
a cross block is one of the plurality of blocks defined on an inner side in the tire lateral direction by the cross circumferential main groove;
a center line intersection point is an intersection point of a center line of the cross lug groove in a groove width direction at a position at which the cross lug groove is connected to the cross circumferential main groove and an edge portion of the cross block on a side defined by the cross circumferential main groove;
the distance Lf is from the center line intersection point to a center line of a groove width of one of the plurality of lug grooves which defines the cross block on a front side in a tire rotation direction; and
the distance Lb is from the center line intersection point to a center line of a groove width of one of the plurality of lug grooves which defines the cross block on a rear side in the tire rotation direction.

In the pneumatic tire, a relationship between a length Lbf and a length Lbb is preferably within a range of 0.8 ≤ (Lbb/Lbf) ≤ 1.2 where the length Lbf is from the center line intersection point to a portion of the edge portion on a front side in the tire rotation direction; and
the length Lbb is from the center line intersection point to a portion of the edge portion on a rear side in the tire rotation direction.

In the pneumatic tire, it is preferred that the circumferential main groove have an amplitude F in the tire lateral direction within a range of 5.0 mm ≤ F ≤ 12.0 mm.

In the pneumatic tire, the plurality of circumferential main grooves preferably have a distance Ws in the tire lateral direction within a range of-0.2 ≤ (Ws/Wg) ≤ 0.2 with respect to an average groove width Wg of the plurality of circumferential main grooves, where
the distance Ws is from a position of an inward bend point in the tire lateral direction and a position of an outward bend point in the tire lateral direction;
the inward bend point is a bend point of an edge portion on an outer side in the tire lateral direction at a bent portion protruding inward in the tire lateral direction;
the outward bend point is a bend point of an edge portion on an inner side in the tire lateral direction at a bent portion protruding outward in the tire lateral direction;
the distance Ws has a positive sign when the inward bend point is located on an outer side in the tire lateral direction with respect to the outward bend point; and
the distance Ws has a negative sign when the inward bend point is located on an inner side in the tire lateral direction with respect to the outward bend point.

### Advantageous Effects of Invention

According to the present invention, the pneumatic tire exerts an effect of maintaining wet performance and suppressing noise at the same time.

### Brief Description of Drawings

FIG. 1 is a plan view for illustrating a tread surface of a pneumatic tire according to an embodiment.
FIG. 2 is a detailed view of portion A of FIG. 1.
FIG. 3 is a detailed view of portion A of FIG. 1 and an explanatory view of a length of an edge portion in a cross block.
FIG. 4 is a schematic view of a circumferential main groove illustrated in FIG. 1.
FIG. 5A is a table for showing the results of performance tests of pneumatic tires.
FIG. 5B is a table for showing the results of performance tests of pneumatic tires.

### Description of Embodiments

With reference to the drawings, a pneumatic tire according to an embodiment of the present invention is described in detail below. Note that, the invention is not limited to the embodiment. Further, constituents of the following embodiment include elements that are essentially identical or that can be substituted or easily conceived by one skilled in the art.

In the following description, "tire lateral direction" refers to the direction that is parallel with a rotation axis of a pneumatic tire. "Inward in the tire lateral direction" refers to the direction toward the tire equatorial plane in the tire lateral direction. "Outward in the tire lateral direction" refers to the direction opposite the direction toward the tire equatorial plane in the tire lateral direction. Further, "tire radial direction" refers to the direction orthogonal to the tire rotation axis. "Tire circumferential direction" refers to the direction of rotation about the tire rotation axis.

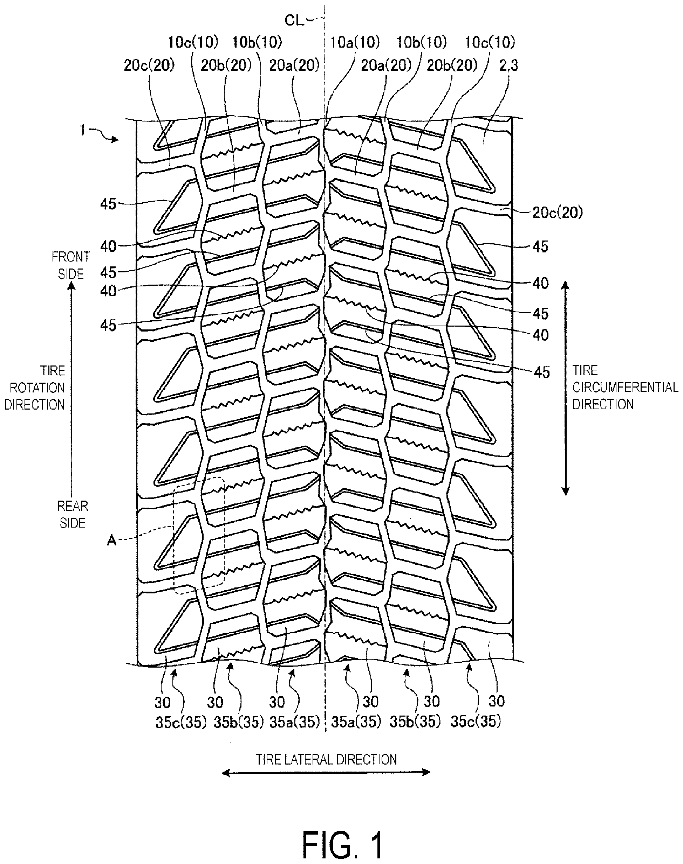

FIG. 1 is a plan view for illustrating a tread surface of a pneumatic tire of an embodiment. A pneumatic tire 1 illustrated in FIG. 1 includes a tread portion 2 in an outermost portion in the tire radial direction. A surface of the tread portion 2, that is, a portion that comes into contact with a road surface when a vehicle (not illustrated) mounted with the pneumatic tire 1 travels, is formed as a tread surface 3. In the tread surface 3, a plurality of circumferential main grooves 10 extending in the tire circumferential direction and a plurality of lug grooves 20 extending in the tire lateral direction are formed. A plurality of blocks 30 being land portions are formed by the circumferential main grooves 10 and the lug grooves 20. That is, both sides of the block 30 in the tire circumferential direction are defined by the lug grooves 20, and at least one end of the block 30 in the tire lateral direction is defined by the circumferential main groove 10. In this manner, each of the blocks 30 has a substantially rectangular shape.

Specifically, five circumferential main grooves 10 are formed side by side in the tire lateral direction. The five circumferential main grooves 10 extend in the tire circumferential direction, and are repeatedly bent and oscillate in the tire lateral direction. That is, the circumferential main grooves 10 extending in the tire circumferential direction are formed into a zigzag shape oscillating in the tire lateral direction while extending in the tire circumferential direction. Among the five circumferential main grooves 10, a circumferential main groove 10 located in the center in the tire lateral direction is referred to as a center circumferential main groove 10a. Two circumferential main grooves 10, which are located adjacent with the center circumferential main groove 10a on both sides of the center circumferential main groove 10a in the tire lateral direction, are referred to as middle circumferential main grooves 10b. Two circumferential main grooves 10 located on outermost sides in the tire lateral direction are referred to as shoulder circumferential main grooves 10c.

Further, the lug grooves 20 do not pass through the circumferential main grooves 10, and the lug grooves 20 adjacent to each other on either side of the circumferential main grooves 10 are formed at different positions in the tire circumferential direction. That is, among the plurality of lug grooves 20, the lug grooves 20, which are connected to the circumferential main groove 10 from both sides in the tire lateral direction, are at different positions in the tire circumferential direction. Further, among the lug grooves 20 located between the circumferential main grooves 10, lug grooves 20, which are located between the center circumferential main groove 10a and the middle circumferential main grooves 10b, are referred to as center lug grooves 20a. The lug grooves 20, which are located between the middle circumferential main grooves 10b and the shoulder circumferential main grooves 10c adjacent to each other, are referred to as middle lug grooves 20b. The lug grooves 20, which are located on the outer sides of the shoulder circumferential main grooves 10c in the tire lateral direction, are referred to as shoulder lug grooves 20c.

Herein, the circumferential main groove 10 has a groove width within a range of from 5 mm to 20 mm, and a groove depth within a range of from 10 mm to 30 mm. Further, the lug groove 20 has a groove width within a range of from 4 mm to 20 mm, and a groove depth within a range of from 5 mm to 30 mm. Further, the lug groove 20 may be inclined in the tire circumferential direction while extending in the tire lateral direction. In this embodiment, the lug groove 20 is inclined at an inclination angle equal to or greater than 45 degrees with respect to the tire circumferential direction in the tire lateral direction.

The blocks 30 defined by the circumferential main grooves 10 and the lug grooves 20 are arranged between the circumferential main grooves 10 adjacent to each other, and are arranged on the outer sides of the two circumferential main grooves 10 in the tire lateral direction, which are located on the outermost sides in the tire lateral direction. Further, the plurality of blocks 30 at the substantially same positions in the tire lateral direction are disposed side by side continuously in the tire circumferential direction on either side of the lug grooves 20. In this manner, the blocks 30 form block rows 35 formed in rows. Four block rows 35 are formed between the five circumferential main grooves 10, and two block rows 35 are formed on the outer sides of the two circumferential main grooves 10 in the tire lateral direction, which are located on the outermost sides in the tire lateral direction. Thus, the six block rows 35 are formed in total. Among the six block rows 35, block rows 35, which are located between the center circumferential main groove 10a and the middle circumferential main grooves 10b, are referred to as center block rows 35a. The block rows 35, which are located between the middle circumferential main grooves 10b and the shoulder circumferential main grooves 10c adjacent to each other, are referred to as middle block rows 35b. The block rows 35, which are located on the outer sides of the shoulder circumferential main grooves 10c in the tire lateral direction, are referred to as shoulder block rows 35c. On the tread surface 3, those six block rows 35 are disposed side by side in the tire lateral direction. A tread pattern of the tread surface 3 of the pneumatic tire 1 according to this embodiment is a so-called block pattern in which the land portions are formed of the plurality of blocks 30 as described above.

Further, the pneumatic tire 1 according to this embodiment has a designated rotation direction when the pneumatic tire 1 is mounted to a vehicle. In the following description, "front side in the tire rotation direction" refers to a rotation direction side when the pneumatic tire 1 is rotated in the designated direction, and is a side which comes into contact with a road surface in the first place or is away from the road surface in the first place when the vehicle mounted with the pneumatic tire 1 travels by rotating the pneumatic tire 1 in the designated direction. Further, "rear side in the tire rotation direction" refers to an opposite side in the rotation direction when the pneumatic tire 1 is rotated in the designated direction, and a side which subsequently comes into contact with the road surface or is subsequently away from the road surface when the vehicle mounted with the pneumatic tire 1 travels by rotating the pneumatic tire 1 in the designated direction. The lug grooves 20 are inclined toward the rear side in the tire rotation direction as they approach the outer sides in the tire lateral direction from the tire equator line CL. That is, the lug grooves 20 extend the tire circumferential direction, and are inclined toward the rear side in the tire rotation direction as they approach from the inner side to the outer sides in the tire lateral direction. Note that, the lug grooves 20 are not necessarily required to extend in the tire lateral direction and be inclined in the tire circumferential direction at all the positions defining the blocks 30 in the tire circumferential direction. It is only required that at least a portion of the lug grooves 20 which define the blocks 30 on the front side in the tire rotation direction be inclined toward the rear side in the tire rotation direction as it approaches the outer sides in the tire lateral direction from the tire equator line CL.

Further, a sipe 40 is formed in each of the blocks 30 included in the two center block rows 35a and the two middle block rows 35b, which are the four block rows 35 in total, among the six block rows 35. The sipe 40 formed in each of the blocks 30 is formed to extend in the tire lateral direction while being bent in the tire circumferential direction. Specifically, the sipe 40 extends in a direction parallel to the lug groove 20 while being bent in the tire circumferential direction. As described above, the sipe 40 extending in the tire lateral direction while oscillating in each of the blocks 30 is formed near the center of each of the blocks 30 in the tire circumferential direction, and has both ends in the tire lateral direction, which are opened to the circumferential main grooves 10 defining both the sides of each of the blocks 30 in the tire lateral direction.

Here, the sipe 40 is formed to have a narrow groove shape in the tread surface 3. When the pneumatic tire 1 is mounted on a regular rim under an internal pressure condition of a regular internal pressure, wall surfaces forming the sipe 40 are not brought into contact with each other during non-loading time. When the sipe 40 is located in a portion of a ground contact region formed on a flat plate when a load is applied on the flat plate in a vertical direction, or when the block 30 having the sipe 40 is in a flexed state, the wall surfaces forming the sipe 40 or at least parts of portions provided with the wall surfaces are brought into contact with each other along with the deformation of the block 30. Here, "regular rim" refers to a "standard rim" defined by the JATMA, a "design rim" defined by the TRA, or a "measuring rim" defined by the ETRTO. Further, "regular internal pressure" refers to a "maximum air pressure" defined by the JATMA, the maximum value in "TIRE LOAD LIMITS AT VARIOUS COLD INFLATION PRESSURES" defined by the TRA, or "INFLATION PRESSURES" defined by the ETRTO. In this embodiment, the sipe 40 has a groove width within a range of from 0.5 mm to 2.0 mm, and a groove depth within a range of from 5 mm to 25 mm.

Further, narrow grooves 45 are formed in the block rows 35 of the blocks 30. As for the narrow grooves 45 formed in the blocks 30, in each of the blocks 30 included in the center block rows 35a and the middle block rows 35b, which are the four block rows 35 in total, two narrow grooves 45 are formed on both sides of the sipe 40 in the tire circumferential direction. The two narrow grooves 45 formed in each of the blocks 30 in the center block rows 35a and the middle block rows 35b extend in along the lug grooves 20, and are opened to the circumferential main grooves 10 defining both the sides of the block 30 in the tire lateral direction. Further, the narrow grooves 45 formed in each of the blocks 30 included in the center block rows 35a have ends on the tire equator line CL side, which are bent to a side opposite to the side in which the sipe 40 is formed in the tire circumferential direction. Further, in each of the blocks 30 included in the shoulder block rows 35c, one narrow groove 45 has both ends, which are opened to the circumferential main groove 10 defining the inner side of each of the blocks 30 in the tire lateral direction. The ends of the narrow groove 45 formed in each of the blocks 30 included in the shoulder block rows 35c are formed at positions substantially continuous from the narrow grooves 45, which are formed in the adjacent block 30, through the circumferential main groove 10. Note that, herein, the narrow groove 45 has a groove width within a range of from 1 mm to 8 mm, and a groove depth within a range of from 0.5 mm to 5 mm.

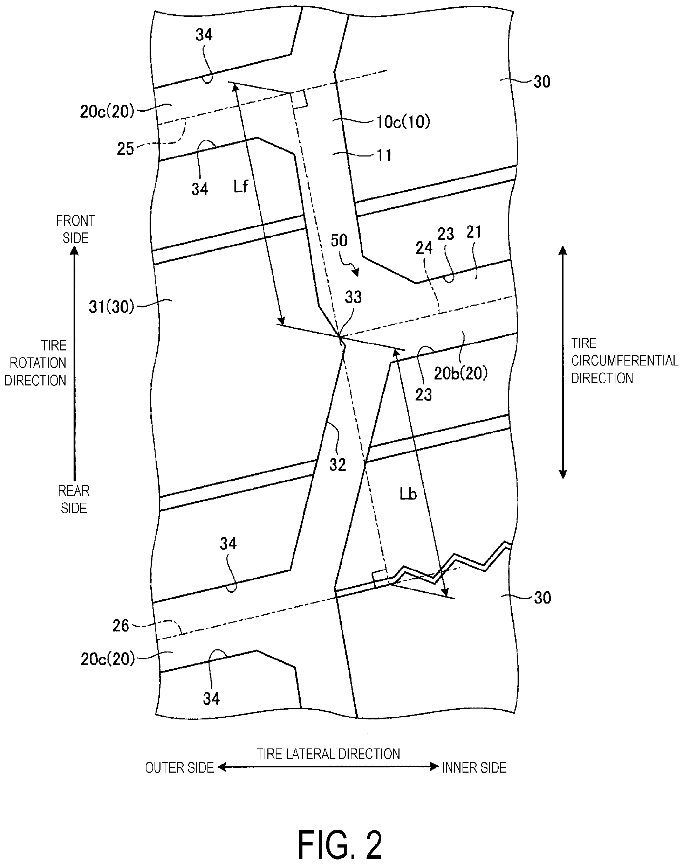

FIG. 2 is a detailed view of portion A of FIG. 1. Around the blocks 30 in the block rows 35, the circumferential main grooves 10 are formed in a zigzag shape. Accordingly, an edge portion 32 being a ridge line on an inner side of the block 30 in the tire lateral direction oscillates in the tire lateral direction while extending in the tire circumferential direction. As described above, the edge portion 32, which oscillates in the tire lateral direction, on the inner side of the block 30 in the tire lateral direction has one projection portion projecting inward in the tire lateral direction. That is, the circumferential main groove 10 oscillating in zigzag manner has a pitch in the tire circumferential direction, which is the same direction as a pitch of the blocks 30 in the tire circumferential direction. In one range in which one block 30 is located, the circumferential main groove 10 protrudes inward in the tire lateral direction at one position near the center of the block 30 in the tire circumferential direction.

The lug groove 20 arranged between the circumferential main grooves 10 is connected to portions near bent portions of the circumferential main grooves 10 formed in a zigzag shape. Specifically, the lug groove 20 is connected to a protruding side of the bent portion of the circumferential main groove 10. That is, at the portion where the bent portion of the circumferential main groove 10 is protruding inward in the tire lateral direction, the lug groove 20 is connected to the circumferential main groove 10 from the inner side in the tire lateral direction. At the portion where the bent portion of the circumferential main groove 10 is protruding outward in the tire lateral direction, the lug groove 20 is connected to the circumferential main groove 10 from the outer side in the tire lateral direction.

As described above, among the lug grooves 20 connected to the circumferential main grooves 10, the lug groove 20 connected to the circumferential main groove 10 from the inner side in the tire lateral direction is connected to the circumferential main groove 10 so as to be located on the front side in the tire rotation direction with respect to the edge portion 32 of the block 30 on the inner side in the tire lateral direction. The inner side of the block 30 in the tire lateral direction is defined by the circumferential main groove 10 to which the lug groove 20 is connected. Specifically, for describing the position at which the lug groove 20 is connected to the circumferential main groove 10, the circumferential main groove 10 forming a cross portion 50 at which the lug groove 20 is connected to the circumferential main groove 10 from the inner side in the tire lateral direction refers to a cross circumferential main groove 11. The lug groove 20 forming the cross portion 50 refers to a cross lug groove 21. The block 30 having the inner side in the tire lateral direction, which is defined by the cross circumferential main groove 11, refers to a cross block 31. For example, in a case where the cross circumferential main groove 11 is the shoulder circumferential main groove 10c, the cross lug groove 21 is the middle lug groove 20b connected to the shoulder circumferential main groove 10c from the inner side in the tire lateral direction, and the cross block 31 is the block 30 which has the inner side in the tire lateral direction defined by the shoulder circumferential main groove 10c and is included in the shoulder block row 35c (see FIG. 1).

Further, an intersection point between a cross lug groove center line 24 and the edge portion 32 refers to a center line intersection point 33. The cross lug groove center line 24 is a center line of the cross lug groove 21 in a groove width direction at a position where the cross lug groove 21 is connected to the cross circumferential main groove 11. The edge portion 32 is on the side of the cross block 31, which is defined by the cross circumferential main groove 11. In this case, the cross lug groove center line 24 is an imaginary line passing through the center between edge portions 23 on both sides of the cross lug groove 21 in the groove width direction. The imaginary line is along the direction in which the cross lug groove 21 extends. Further, in a case where the cross lug groove 21 is bent, the cross lug groove center line 24 in the cross lug groove 21 is a center line passing through the center between the edge portions 23 in a range extending linearly from the position at which the cross lug groove 21 is connected to the cross circumferential main groove 11.

Further, a center line of the groove width of the lug groove 20 defining the front side of the cross block 31 in the tire rotation direction refers to a front lug groove center line 25. A center line of the groove width of the lug groove 20 defining the rear side of the cross block 31 in the tire rotation direction refers to a rear lug groove center line 26. In this case, similar to the cross lug groove center line 24, the front lug groove center line 25 is an imaginary line passing through the center between edge portions 34 on both sides of the lug groove 20 in the groove width direction, which define the front side of the cross block 31 in the tire rotation direction. The imaginary line is along the direction in which the lug groove 20 extends. Further, the rear lug groove center line 26 is an imaginary line passing through the center between the edge portions 34 on both the sides of the lug groove 20 in the groove width direction, which defines the rear side of the cross block 31 in the tire rotation direction. The imaginary line is along the direction in which the lug groove 20 extends.

When the definitions are made as described above, the cross lug groove 21 satisfies a relationship between a distance Lf from the center line intersection point 33 to the front lug groove center line 25 and a distance Lb from the center line intersection point 33 to the rear lug groove center line 26, which is within a range of 1.1 ≤ (Lb/Lf) ≤ 1.2. That is, the distance Lf passes through the center line intersection point 33, and refers to the distance Lf between the front lug groove center line 25 and the center line intersection point 33 on a normal line perpendicular to the front lug groove center line 25. The distance Lb passes through the center line intersection point 33, and refers to the distance Lb between the rear lug groove center line 26 and the center line intersection point 33 on a normal line perpendicular to the rear lug groove center line 26. That is, the distance Lb is greater than the distance Lf, and is 1.1 to 1.2 times of the distance Lf.

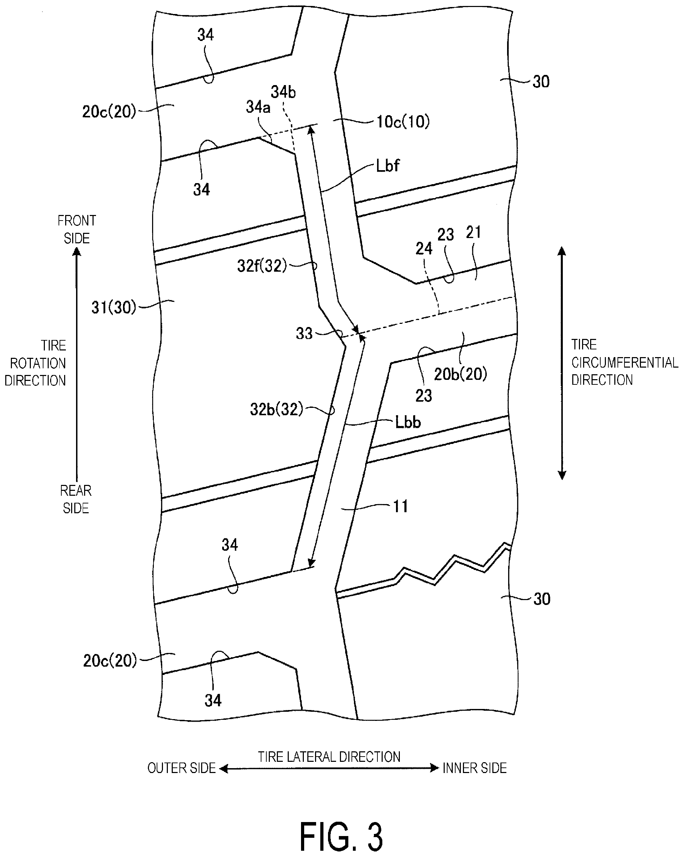

FIG. 3 is a detailed view of portion A of FIG. 1 and an explanatory view of a length of the edge portion 32 in the cross block 31. Further, in the edge portion 32 of the cross block 31 on the side defined by the cross circumferential main groove 11, a portion on the front side in the tire rotation direction with respect to the center line intersection point 33 and a portion on the rear side with respect to the center line intersection point 33 have substantially the same length. That is, in the edge portion 32 of the cross block 31 on the side defined by the cross circumferential main groove 11, a relative ratio of a length of the portion on the front side in the tire rotation direction with respect to the center line intersection point 33 and a length of the portion on the rear side with respect to the center line intersection point 33 is within a predetermined range. Specifically, a relationship between a length Lbf of a front edge portion 32f and a length Lbb of a rear edge portion 32b is within a range of 0.8 ≤ (Lbb/Lbf) ≤ 1.2. The front edge portion 32f is a portion of the edge portion 32 of the cross block 31 on the front side with respect to the center line intersection point 33 in the tire rotation direction. The rear edge portion 32b is a portion of the edge portion 32 of the cross block 31 on the rear side with respect to the center line intersection point 33 in the tire rotation direction.

In this case, the length Lbf of the front edge portion 32f and the length Lbb of the rear edge portion 32b are along the edge portion 32. That is, in a case where the front edge portion 32f and the rear edge portion 32b are bent, the length Lbf of the front edge portion 32f and the length Lbb of the rear edge portion 32b are along the bent shape. Further, in a case where a corner portion of the cross block 31 is chamfered, the length Lbf of the front edge portion 32f and the length Lbb of the rear edge portion 32b are equal to those in the case where a chamfer is not formed. For example, in a case where a chamfer 34a is formed in a portion at which the front edge portion 32f intersects with the edge portion 34 of the lug groove 20 defining the front side of the cross block 31 in the tire rotation direction, the length Lbf of the front edge portion 32f is a length along a shape of the front edge portion 32f, which is from the center line intersection point 33 to an intersection point 34b of an extension line of the edge portion 34 of the lug groove 20 and an extension line of the front edge portion 32f. As for the length Lbf of the front edge portion 32f and the length Lbb of the rear edge portion 32b, which are specified as described above, the length Lbb of the rear edge portion 32b is within a range of from 0.8 to 1.2 times of the length Lbf of the front edge portion 32f.

Note that, in the above-mentioned description, the case where the shoulder circumferential main groove 10c is the cross circumferential main groove 11 and the middle lug groove 20b is the cross lug groove 21 is given. In the pneumatic tire 1 according to this embodiment, with regard to the portions at which the lug grooves 20 are connected to the circumferential main grooves 10 from the inner side in the tire lateral direction, all the relative positional relationships and all the relative dimensional relationships satisfy the above-mentioned relationships. For example, at the portion at which the middle circumferential main grooves 10b and the center lug grooves 20a are connected to each other, the middle circumferential main grooves 10b are the cross circumferential main grooves 11, the center lug grooves 20a are the cross lug grooves 21, and the blocks 30 in the middle block rows 35b are the cross blocks 31. The relative positional relationships and the relative dimensional relationships satisfy the above-mentioned relationships.

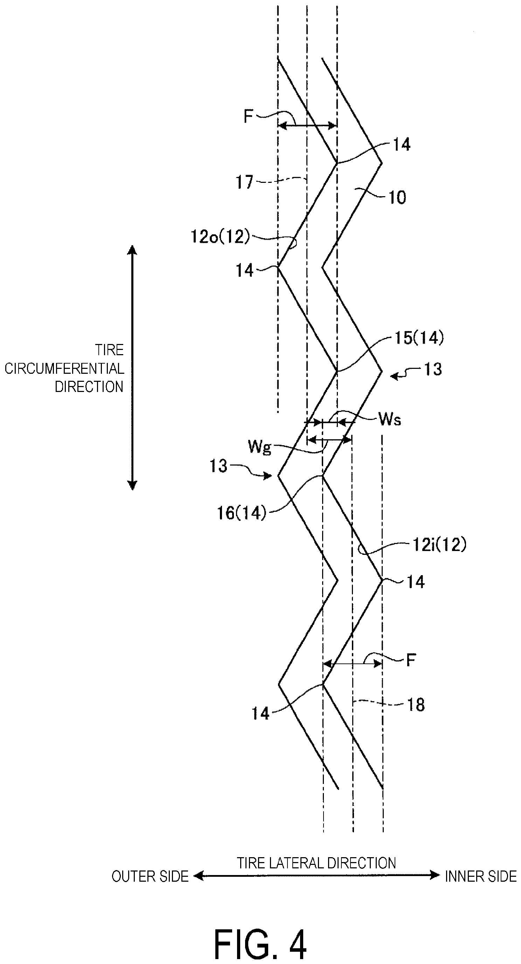

FIG. 4 is a schematic view of the circumferential main groove 10 illustrated in FIG. 1. The circumferential main groove 10, which oscillates in the tire lateral direction while extending in the tire circumferential direction, oscillates without largely changing an interval between edge portions 12 located on both the sides in the groove width direction. An amplitude F in the tire lateral direction is within a range of 5.0 mm ≤ F ≤ 12.0 mm. For example, in an outer edge portion 12o being the edge portion 12 on the outer side in the tire lateral direction among the edge portions 12 on both the side of the circumferential main groove 10 in the groove width direction, a distance in the tire lateral direction between a bend point 14 of a bent portion 13 protruding inward in the tire lateral direction and a bend point 14 of a bent portion 13 protruding outward in the tire lateral direction refers to the amplitude F of the outer edge portion 12o.

Similarly, in an inner edge portion 12i being the edge portion 12 on the inner side in the tire lateral direction among the edge portions 12 on both the sides of the circumferential main groove 10 in the groove width direction, a distance in the tire lateral direction between a bend point 14 of a bent portion 13 protruding inward in the tire lateral direction and a bend point 14 of a bent portion 13 protruding outward in the tire lateral direction refers to the amplitude F of the inner edge portion 12i. In the circumferential main grooves 10, both the amplitude F of the outer edge portion 12o and the amplitude F of the inner edge portion 12i are within a range of 5.0 mm ≤ F ≤ 12.0 mm. The outer edge portion 12o and the inner edge portion 12i are formed in substantially parallel to each other at an interval that changes within a predetermined range.

Further, the circumferential main groove 10 oscillates in the tire lateral direction so that an inward bend point 15 and an outward bend point 16 have a positional relationship within a predetermined range. The inward bend point 15 is the bend point 14 of the outer edge portion 12o at the bent portion 13 protruding inward in the tire lateral direction. The outward bend point 16 is the bend point 14 of the inner edge portion 12i at the bent portion 13 protruding outward in the tire lateral direction. Specifically, in the circumferential main groove 10, a distance Ws from the position of the inward bend point 15 in the tire lateral direction to the position of the outward bend point 16 in the tire lateral direction is within a range of -0.2 ≤ (Ws/Wg) ≤ 0.2 with respect to an average groove width Wg of the circumferential main groove 10.

In this case, when the inward bend point 15 is on the outer side in the tire lateral direction with respect to the outward bend point 16, the distance Ws in the tire lateral direction between the inward bend point 15 and the outward bend point 16 is denoted with a plus sign. When the inward bend point 15 is on the inner side in the tire lateral direction with respect to the outward bend point 16, the distance Ws is denoted with a minus sign. That is, the distance Ws in the case of the positional relationship between the inward bend point 15 and the outward bend point 16 illustrated in FIG. 4 is denoted with a minus sign.

Further, in this case, the average groove width Wg of the circumferential main groove 10 is a distance in the tire lateral direction between a center line of an amplitude of one edge portion 12 in the tire lateral direction and a center line of an amplitude the other edge portion 12 in the tire lateral direction among the edge portions 12 on both the sides of the circumferential main groove 10 in the groove width direction. Specifically, the average groove width Wg of the circumferential main groove 10 is a distance in the tire lateral direction between an outer edge portion bend center line 17 and an inner edge portion bend center line 18. The outer edge portion bend center line 17 is a center line of the amplitude F of the outer edge portion 12o in the tire lateral direction. The inner edge portion bend center line 18 is a center line of the amplitude F of the inner edge portion 12i in the tire lateral direction. In this case, the outer edge portion bend center line 17 is a center line indicating the center in the tire lateral direction between the bend point 14 at the bent portion 13 protruding outward in the tire lateral direction and the bend point 14 at the bent portion 13 protruding inward in the tire lateral direction in the outer edge portion 12o. Similarly, the inner edge portion bend center line 18 is a center line indicating the center in the tire lateral direction between the bend point 14 at the bent portion 13 protruding outward in the tire lateral direction and the bend point 14 at the bent portion 13 protruding inward in the tire lateral direction in the inner edge portion 12i.

The pneumatic tire 1 according to this embodiment having the configuration described above is used as a heavy duty pneumatic tire. When a vehicle is mounted with the pneumatic tire 1, the pneumatic tire 1 is mounted on a rim wheel in an inflated state. The pneumatic tire 1 mounted on a rim wheel is used by being mounted to a large vehicle such as a truck and a bus.

When the vehicle mounted with the pneumatic tire 1 travels, the pneumatic tire 1 rotates while a lower part of the tread surface 3 comes into contact with the road surface. When the tire mounted with the pneumatic tire 1 travels on a dry road surface, traveling is performed by transmitting a driving force and a braking force to the road surface and generating a turning force mainly by a friction force between the tread surface 3 and the road surface. Further, at the time of driving on a wet road surface, water between the tread surface 3 and the road surface enters the circumferential main grooves 10, the lug grooves 20, and the like. Thus, traveling is performed while the water between the tread surface 3 and the road surface is drained through those grooves. Accordingly, the tread surface 3 easily comes into contact with the road surface, and the vehicle can travel due to the friction force between the tread surface 3 and the road surface.

Further, the pneumatic tire 1 according to this embodiment has a designated rotation direction. Moreover, the distance Lf between the center line intersection point 33 and the front lug groove center line 25 and the distance Lb between the center line intersection point 33 and the rear lug groove center line 26 have a relationship within a range of 1.1 ≤ (Lb/Lf) ≤ 1.2. Thus, noise generated when the pneumatic tire 1 rotates while the tread surface 3 comes into contact with the road surface can be suppressed. Specifically, a hitting sound is generated when the blocks 30 comes into contact with the road surface. The sound passes through the compressed circumferential main grooves 10 and the compressed lug grooves 20, and leaks out to a region other than a ground contact region of the tread surface 3 with respect to the ground surface. Accordingly, the sound is felt as noise. Further, a ground contact pressure is high in a portion near the center as compared to portions on both sides of the ground contact region in the tire lateral direction. Thus, the hitting sound is liable to be increased in the portion near the center of the tread surface 3 in the tire lateral direction, that is, near the tire equator line CL. The sound generated near the tire equator line CL is dispersed through the circumferential main grooves 10 and the lug grooves 20. The sound passing through the lug grooves 20 passes through the lug grooves 20 outward in the tire lateral direction. When the sound passing through the lug grooves 20 reaches the positions of the circumferential main grooves 10 to which the outer ends of the lug grooves 20 in the tire lateral direction are connected, the sound passes through the circumferential main grooves 10.

At this time, in the pneumatic tire 1 according to this embodiment, the relationship of the distance Lf between the center line intersection point 33 and the front lug groove center line 25 and the distance Lb between the center line intersection point 33 and the rear lug groove center line 26 is within a range of 1.1 ≤ (Lb/Lf) ≤ 1.2. Thus, the sound passing from the cross lug groove 21 to the cross circumferential main groove 11 is liable to pass through the cross circumferential main groove 11 on the front side in the tire rotation direction. That is, in a case of (Lb/Lf) < 1.1 the sound passing from the cross lug groove 21 to the cross circumferential main groove 11 is liable to pass through the cross circumferential main groove 11 on the rear side in the tire rotation direction. The noise passing through the cross circumferential main groove 11 on the rear side in the tire rotation direction passes through the cross circumferential main groove 11 on the rear side in the tire rotation direction, and passes through the lug groove 20 connected to the cross circumferential main groove 11 at the position on the rear side in the tire rotation direction with respect to the cross lug groove 21. As described above, when the circumferential main grooves 10 and the lug grooves 20, which are closed by the road surface, are away from the road surface long with the rotation of the pneumatic tire 1, the sound passing to the rear side in the tire rotation direction through the circumferential main grooves 10 such as the cross circumferential main groove 11 and the lug grooves 20 is released at one time to be large sound. That is, when the circumferential main grooves 10 and the lug grooves 20 having the sound passing therethrough move to the rear side of the ground contact region in the tire rotation direction along the rotation of the pneumatic tire 1, the sound passing through those grooves is released to the outside of the ground contact region at one time. In this case, the air compressed in the grooves is released for a short time period, and is released as large sound, which causes noise.

In contrast, in the pneumatic tire 1 according to this embodiment, (Lb/Lf) ≥ 1.1 is satisfied. Thus, the sound passing from the cross lug groove 21 to the cross circumferential main groove 11 is liable to pass through the cross circumferential main groove 11 on the front side in the tire rotation direction. The sound passing through the cross circumferential main groove 11 on the front side in the tire rotation direction passes through the lug groove 20 connected to the cross circumferential main groove 11 at the position on the front side in the tire rotation direction with respect to the cross lug groove 21. The sound passing through the lug grooves 20 passes through the circumferential main grooves 10 to which the outer ends in the tire lateral direction are connected, and further passes through the circumferential main grooves 10 on the front side in the tire rotation direction.

As described above, when the sound passing from the cross lug groove 21 to the cross circumferential main groove 11 is liable to pass through the cross circumferential main groove 11 on the front side in the tire rotation direction, the sound passing through the circumferential main grooves 10 and the lug grooves 20 is liable to pass to the front side in the tire rotation direction as approaching the outer side in the tire lateral direction from the inside in the tire lateral direction. In this case, the sound generated when the tread surface 3 comes into contact with the ground is gradually released from both the sides of the ground contact region in the tire lateral direction. Thus, the noise can be released to the outside of the ground contact region in a small sound state. With this, the hitting sound generated when the blocks 30 comes into contact with the road surface can be released to the outside of the ground contact region to be small sound. Accordingly, the noise can be suppressed.

Note that, at the time of traveling on a wet road surface, similar to the case where the sound passes through the grooves, the water flowing through the circumferential main grooves 10 and the lug grooves 20 flows to the front side in the tire rotation direction as approaching the outer side in the tire lateral direction from the inner side in the tire lateral direction. Thus, the water between tread surface 3 and the road surface is less likely to be discharged from therebetween. Particularly, in a case of (Lb/Lf) > 1.2, the water flowing from the cross lug groove 21 to the cross circumferential main groove 11 is less likely to flow through the cross circumferential main groove 11 on the rear side in the tire rotation direction. Similar to the case where the sound passes through the circumferential main grooves 10 and the lug grooves 20, the water flowing through those grooves is less likely to be discharged. In this case, the water between the tread surface 3 and the road surface is less likely to be released into the grooves or discharged to the outside of the ground contact region. Thus, there is a risk in that wet performance may be degraded.

In contrast, in the pneumatic tire 1 according to this embodiment, (Lb/Lf) ≤ 1.2 is satisfied. Thus, the water flowing from the cross lug groove 21 to the cross circumferential main groove 11 can be caused to flow to the rear side in the tire rotation direction to a certain extent. Thus, drainage performance exerted by the circumferential main grooves 10 and the lug grooves 20 can be secured. Further, the pneumatic tire 1 according to this embodiment is a heavy duty pneumatic tire, and hence a load per unit area of the tread surface 3 is large. Thus, even in the case of traveling on the wet road surface, a friction force can be secured between the tread surface 3 and the road surface due to the load. Accordingly, traction performance can be secured. With this, wet performance being performance that enables traveling on the wet road surface can be secured. As a result, noise can be suppressed while wet performance is maintained.

Further, the relationship of the length Lbf of the front edge portion 32f and the length Lbb of the rear edge portion 32b is within a range of 0.8 ≤ (Lbb/Lbf) ≤ 1.2. Thus, noise can be suppressed while drainage performance is further secured. That is, even when 1.1 ≤ (Lb/Lf) ≤ 1.2 is satisfied, it is conceived that the sound passing from the cross lug groove 21 to the cross circumferential main groove 11 is less likely to pass to the front side in the tire rotation direction depending on the shape of the edge portion 32 of the cross block 31 along with bending of the circumferential main grooves 10. In contrast, in the case where the relationship of the length Lbf of the front edge portion 32f and the length Lbb of the rear edge portion 32b is within a range of 0.8 ≤ (Lbb/Lbf) ≤ 1.2, the length Lbf of the front edge portion 32f and the length Lbb of the rear edge portion 32b have substantially the same length. Thus, by satisfying 1.1 ≤ (Lb/Lf) ≤ 1.2, the sound flowing from the cross lug groove 21 to the cross circumferential main groove 11 can be prevented from being released as large sound more securely while drainage performance of water flowing from the cross lug groove 21 to the cross circumferential main groove 11 is secured. As a result, noise can further be suppressed while wet performance is maintained.

Further, the amplitude F of the circumferential main groove 10 in the tire lateral direction is within a range of 5.0 mm ≤ F ≤ 12.0 mm. Thus, noise can be suppressed more securely while increase of rolling resistance is prevented. That is, in a case where the amplitude F of the circumferential main groove 10 is smaller than 5.0 mm, the sound passing through the circumferential main grooves 10 is less likely to be released to the outside of the ground contact region through the circumferential main grooves 10. In this case, there is a risk in that noise may be less likely to be reduced. Further, when the amplitude F of the circumferential main groove 10 is larger than 12.0 mm, the amplitude of the circumferential main groove 10 in the tire lateral direction is excessively large. Thus, there is a risk in that the blocks 30 may be largely deformed and that rolling resistance may be increased. In contrast, in a case where the amplitude F of the circumferential main groove 10 is within a range of 5.0 mm ≤ F ≤ 12.0 mm, the sound, which is released to the outside of the ground contact region from the circumferential main grooves 10, is prevented from being excessively increased. Accordingly, noise caused by such sound can be suppressed. Further, the blocks 30 are prevented from being largely deformed. Accordingly, rolling resistance caused by such blocks 30 can be suppressed. As a result, noise can be suppressed while rolling resistance is prevented from being excessively increased.

Further, the distance Ws between the inward bend point 15 and the outward bend point 16 of the circumferential main groove 10 in the tire lateral direction is within a range of -0.2 ≤ (Ws/Wg) ≤ 0.2 with respect to the average groove width Wg of the circumferential main groove 10. Thus, noise can be suppressed more securely while uneven wear that is caused by a rigidity difference among the blocks 30 is prevented. That is, in a case of (Ws/Wg) < -0.2, the amplitude of the circumferential main groove 10 is excessively large. Thus, rigidity of the block 30 near the bent portion 13 of the circumferential main groove 10 is excessively degraded. Accordingly, there is a risk in that wear may be liable to be caused at this portion. In this case, a degree of wear differs among the blocks 30, and hence there is a risk in that uneven wear may be caused. Further, in a case of (Ws/Wg)> 0.2, the amplitude of the circumferential main groove 10 is excessively small. Thus, the sound passing through the circumferential main grooves 10 is liable to be released to the outside of the ground contact region through the circumferential main grooves 10, and hence there is a risk in that noise may be less likely to be suppressed. In contrast, in a case of -0.2 ≤ (Ws/Wg) ≤ 0.2, the rigidity of the block 30 near the bent portion 13 of the circumferential main groove 10 can be prevented from being excessively degraded. Thus, uneven wear can be suppressed. Further, the sound can be prevented from being excessively released from the circumferential main grooves 10 to the outside of the ground contact region. Moreover, noise caused by the sound excessively released from the circumferential main grooves 10 can be suppressed. As a result, noise can be suppressed while uneven wear is prevented.

Note that, in the pneumatic tire 1 according to the above-mentioned embodiment, the five circumferential main grooves 10 are formed, and the six block rows 35 are formed. However, the number of the circumferential main grooves 10 and the number of the block rows 35 may be other than those numbers. Regardless of the number of the circumferential main grooves 10 and the number of the block rows 35, it is only required that the relationship of the distance Lf between the center line intersection point 33 and the front lug groove center line 25 and the distance Lb between the center line intersection point 33 and the rear lug groove center line 26 be within a range of 1.1 ≤ (Lb/Lf) ≤ 1.2 at the portion where the lug groove 20 is connected to the circumferential main groove 10 from the inner side in the tire lateral direction.

### Examples

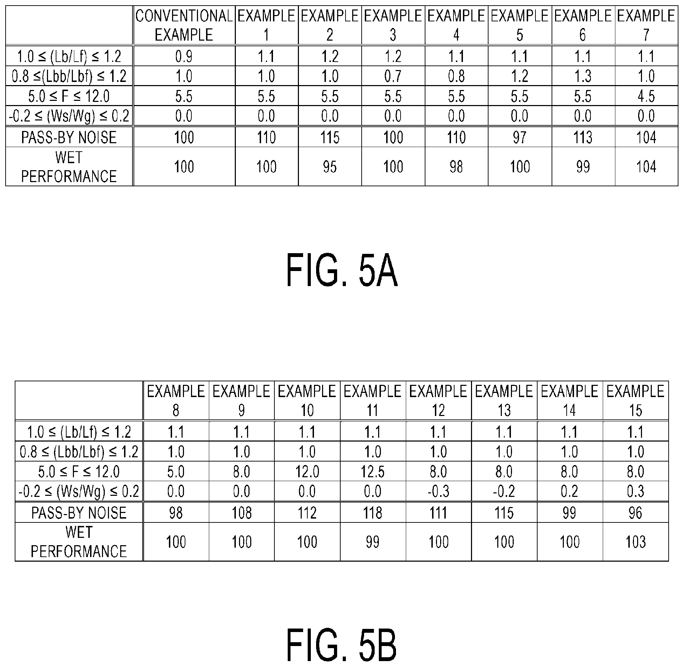

Each of FIG. 5A and FIG. 5B is a table for showing the results of performance tests of pneumatic tires. Now, in relation to the pneumatic tire 1 described above, performance evaluation tests conducted on a pneumatic tire 1 of a conventional example and pneumatic tires 1 according to embodiments of the present invention are described. The performance evaluation tests were conducted with regard to pass-by noise being sound generated along with rotation of the pneumatic tire 1 and wet performance being running performance at the time of traveling on a wet road surface.

The performance evaluation tests were conducted in the following manner. That is, the pneumatic tire 1 having a tire size of 315/70R22.5 specified by the ETRTO was mounted on a regular rim, and an air pressure was adjusted to 900 kPa. The pneumatic tire 1 was mounted on a test vehicle with a tractor head (2-D), and test driving was performed. As for an evaluation method for each test, pass-by noise was evaluated with loudness of vehicle-external pass-by sound, which was measured by a tire noise test method specified in ECE R117-02 (ECE Regulation No. 117, Revision 2). In those tests, the test vehicle traveled for a sufficient distance before a noise measurement section, and stopped an engine in front of the section to perform coasting traveling. Maximum noise values dB (noise values being within a frequency range of from 800 Hz to 1200 Hz) in the noise measurement section during the coasting traveling were measured at a plurality of speeds obtained by evenly dividing a speed range of ±10 km/h with respect to a reference speed into eight or more sections. An average value of the maximum noise values was regarded as a vehicle-external pass-by noise. The maximum noise value dB was a sound pressure dB (A) measured by an A-weighting frequency correction circuit through use of a fixed microphone, which was installed in the middle of the noise measurement section at a road-side point of 7.5 m from a traveling center line and at a height of 1.2 m from a road surface. With regard to the pass-by noise, the measurement results are indicated with index values by taking a conventional example described later as a base of 100. A larger value indicates a smaller sound pressure dB, which means excellent performance with respect to the pass-by noise.

Further, as for wet performance, a tire was mounted on a trailer, and a maximum braking force which was generated before the tire is locked at a speed of 50 km/h on a road surface having a water depth of from 0.5 mm to 2.0 mm, was measured. With regard to the wet performance, the measurement results are indicated with index values by taking the conventional example described later as a base of 100. A larger value indicates a shorter braking distance on a wet road surface, which means excellent wet performance. Note that, even in a case where pass-by noise and wet performance are lower than those in the conventional example, index values equal to or more than 95 indicate performance within an allowable range.

The evaluation tests were conducted with respect to sixteen types of pneumatic tires including a pneumatic tire in the conventional example being an example of a related-art pneumatic tire and the pneumatic tires 1 according to the present invention in Examples 1 to 15. Among those pneumatic tires 1, the pneumatic tire in the conventional example had the relationship of the distance Lf between the center line intersection point 33 and the front lug groove center line 25 and the distance Lb between the center line intersection point 33 and the rear lug groove center line 26, which are not within a range of 1.1 ≤ (Lb/Lf) ≤ 1.2.

In contrast, in all Examples 1 to 15 being examples of the pneumatic tires 1 according to the present invention, the relationship between the distance Lf between the center line intersection point 33 and the front lug groove center line 25 and the distance Lb between the center line intersection point 33 and the rear lug groove center line 26 is within a range of 1.1 ≤ (Lb/Lf) ≤ 1.2. Further, the relationship between the distance Lf between the center line intersection point 33 and the front lug groove center line 25 and the distance Lb between the center line intersection point 33 and the rear lug groove center line 26, the relationship between the length Lbf of the front edge portion 32f and the length Lbb of the rear edge portion 32b, the amplitude F of the circumferential main groove 10, the relationship between the distance Ws between the inward bend point 15 and the outward bend point 16 of the circumferential main groove 10 in the tire lateral direction and the average groove width Wg of the circumferential main groove 10 were different among the pneumatic tires 1 in Examples 1 to 15.

As a result of conducting the evaluation tests by using those pneumatic tires 1, as indicated in FIG. 5A and FIG. 5B, it can be seen that the pneumatic tires 1 of Examples 1 to 15 can maintain both pass-by noise and wet performance within an allowable range as compared to the Conventional Example. That is, the pneumatic tires 1 in Examples 1 to 15 can suppress noise while maintaining wet performance.

### Reference Signs List

1 Pneumatic tire
2 Tread portion
3 Tread surface
10 Circumferential main groove
11 Cross circumferential main groove
12 Edge portion
13 Bent portion
14 Bend point
15 Inward bend point
16 Outward bend point
20 Lug groove
21 Cross lug groove
23, 32, 34 Edge portion
24 Cross lug groove center line
25 Front lug groove center line
26 Rear lug groove center line
30 Block
31 Cross block
32f Front edge portion
32b Rear edge portion
33 Center-line intersection point
35 Block row
50 Cross portion

## Claims

1. A pneumatic tire (1) with a designated rotation direction, comprising:
a plurality of circumferential main grooves (10) formed in a tread surface (3) and extending in a tire circumferential direction;
a plurality of lug grooves (20) formed in the tread surface (3) and extending in a tire lateral direction; and
a plurality of blocks (30), each of the plurality of blocks being defined on both sides in the tire circumferential direction by the plurality of lug grooves (20) and comprising at least one end in the tire lateral direction defined by the plurality of circumferential main grooves (10); wherein
the plurality of circumferential main grooves (10) are repeatedly bent and oscillate in the tire lateral direction while extending in the tire circumferential direction;
the plurality of lug grooves (20), which are connected to the plurality of circumferential main grooves (10) from both sides in the tire lateral direction, are located at different positions in the tire circumferential direction; **characterized in that**
a relationship between a distance Lf and a distance Lb is within a range of 1.1 ≤ (Lb/Lf) ≤ 1.2, where
a cross circumferential main groove (11) is one of the plurality of circumferential main grooves (10) which forms a cross portion at which the plurality of lug grooves (20) is connected to the plurality of circumferential main grooves (10) from an inner side in the tire lateral direction;
a cross lug groove (21) is one of the plurality of lug grooves (20) which forms the cross portion;
a cross block (31) is one of the plurality of blocks (30) defined on an inner side in the tire lateral direction by the cross circumferential main groove (11);
a center line intersection point (33) is an intersection point of a center line (24) of the cross lug groove (21) in a groove width direction at a position at which the cross lug groove (21) is connected to the cross circumferential main groove (11) and an edge portion (32) of the cross block (31) on a side defined by the cross circumferential main groove (11);
the distance Lf is from the center line intersection point (33) to a center line (25) of a groove width of one of the plurality of lug grooves (20) which defines the cross block (31) on a front side in a tire rotation direction; and the distance Lb is from the center line intersection point (33) to a center line (26) of a groove width of one of the plurality of lug grooves (20) which defines the cross block (31) on a rear side in the tire rotation direction.

2. The pneumatic tire according to claim 1, wherein
a relationship between a length Lbf and a length Lbb is within a range of 0.8 ≤ (Lbb/Lbf) ≤ 1.2 where
the length Lbf is from the center line intersection point (33) to a portion of the edge portion (34) of the cross block (31) on a front side in the tire rotation direction; and
the length Lbb is from the center line intersection point (33) to a portion of the edge portion (34) of the cross block (31) on a rear side in the tire rotation direction.

3. The pneumatic tire according to claim 1 or 2, wherein
the plurality of circumferential main grooves (10) have an amplitude F in the tire lateral direction within a range of 5.0 mm ≤ F ≤ 12.0 mm.

4. The pneumatic tire according to any one of claims 1 to 3, wherein
the plurality of circumferential main grooves (10) have a distance Ws in the tire lateral direction within a range of -0.2 ≤ (Ws/Wg) ≤ 0.2 with respect to an average groove width Wg of the plurality of circumferential main grooves (10), where
the distance Ws is from a position of an inward bend point (15) in the tire lateral direction and a position of an outward bend point (16) in the tire lateral direction;
the inward bend point (15) is a bend point (14) of an edge portion on an outer side in the tire lateral direction at a bent portion (13) protruding inward in the tire lateral direction;
the outward bend point (16) is a bend point (14) of an edge portion on an inner side in the tire lateral direction at a bent portion (13) protruding outward in the tire lateral direction;
the distance Ws has a positive sign when the inward bend point (15) is located on an outer side in the tire lateral direction with respect to the outward bend point (16); and
the distance Ws has a negative sign when the inward bend point (15) is located on an inner side in the tire lateral direction with respect to the outward bend point (16).

## Patentansprüche

1. Luftreifen (1) mit einer vorgesehenen Drehrichtung, umfassend:
eine Mehrzahl von Hauptumfangsrillen (10), die in einer Laufflächenoberfläche (3) ausgebildet sind und in einer Reifenumfangsrichtung verlaufen;
eine Mehrzahl von Stollenrillen (20), die in der Laufflächenoberfläche (3) ausgebildet sind und in einer Reifenquerrichtung verlaufen; und
eine Mehrzahl von Blöcken (30), wobei jeder der Mehrzahl von Blöcken auf beiden Seiten in Reifenumfangsrichtung durch die Mehrzahl von Stollenrillen (20) definiert ist und mindestens ein Ende in Reifenquerrichtung umfasst, das durch die Mehrzahl von Hauptumfangsrillen (10) definiert ist; wobei die Mehrzahl von Hauptumfangsrillen (10) wiederholt gebogen sind und in Reifenquerrichtung oszillieren, während sie sich in Reifenumfangsrichtung erstrecken;
wobei die Mehrzahl von Stollenrillen (20), die mit der Mehrzahl von Hauptumfangsrillen (10) von beiden Seiten in Reifenquerrichtung verbunden sind, an unterschiedlichen Positionen in Reifenumfangsrichtung angeordnet sind;
**dadurch gekennzeichnet, dass**
ein Verhältnis zwischen einem Abstand Lf und einem Abstand Lb innerhalb eines Bereichs von 1,1 ≤ (Lb/Lf) ≤ 1,2 liegt, wobei
eine Kreuz-Hauptumfangsrille (11) eine der Mehrzahl von Hauptumfangsrillen (10) ist, die einen Kreuzabschnitt bildet, an dem die Mehrzahl von Stollenrillen (20) mit der Mehrzahl von Hauptumfangsrillen (10) von einer Innenseite in Reifenquerrichtung verbunden ist;
eine Kreuz-Stollenrille (21) eine aus der Mehrzahl von Stollenrillen (20) ist, die den Kreuzabschnitt bildet;
ein Kreuz-Block (31) einer der Mehrzahl von Blöcken (30) ist, der auf einer Innenseite in Reifenquerrichtung durch die Kreuz-Hauptumfangsrille (11) definiert ist; ein Mittellinienschnittpunkt (33) ein Schnittpunkt einer Mittellinie (24) der Kreuz-Stollenrille (21) in einer Rillenbreitenrichtung an einer Position, an der die Kreuz-Stollenrille (21) mit der Kreuz-Hauptumfangsrille (11) verbunden ist, und eines Randabschnitts (32) des Kreuz-Blocks (31) auf einer durch die Kreuz-Hauptumfangsrille (11) definierten Seite ist;
der Abstand Lf von dem Mittellinienschnittpunkt (33) zu einer Mittellinie (25) einer Rillenbreite einer der Mehrzahl von Stollenrillen (20) ist, die den Kreuz-Block (31) an einer Vorderseite in einer Reifendrehrichtung definiert; und der Abstand Lb von dem Mittellinienschnittpunkt (33) zu einer Mittellinie (26) einer Rillenbreite einer der Mehrzahl von Stollenrillen (20) ist, die den Kreuz-Block (31) an einer Rückseite in der Reifendrehrichtung definiert.

2. Luftreifen gemäß Anspruch 1, wobei
ein Verhältnis zwischen einer Länge Lbf und einer Länge Lbb innerhalb eines Bereichs von 0,8 ≤ (Lbb/Lbf) ≤ 1,2 liegt, wobei
die Länge Lbf von dem Mittellinienschnittpunkt (33) bis zu einem Abschnitt des Randabschnitts (34) des Kreuz-Blocks (31) an einer Vorderseite in Reifendrehrichtung ist; und
die Länge Lbb von dem Mittellinienschnittpunkt (33) zu einem Abschnitt des Randabschnitts (34) des Kreuz-Blocks (31) an einer Rückseite in Reifendrehrichtung ist.

3. Luftreifen gemäß Anspruch 1 oder 2, wobei
die Mehrzahl von Hauptumfangsrillen (10) eine Amplitude F in Reifenquerrichtung innerhalb eines Bereichs von 5,0 mm ≤ F ≤ 12,0 mm aufweist.

4. Luftreifen gemäß einem der Ansprüche 1 bis 3, wobei
die Mehrzahl von Hauptumfangsrillen (10) einen Abstand Ws in Reifenquerrichtung innerhalb eines Bereichs von -0,2 ≤ (Ws/Wg) ≤ 0,2 in Bezug auf eine durchschnittliche Rillenbreite Wg der Mehrzahl von Hauptumfangsrillen (10) aufweist, wobei
der Abstand Ws von einer Position eines Einwärtsknickpunkts (15) in Reifenquerrichtung und einer Position eines Auswärtsknickpunkts (16) in Reifenquerrichtung ist;
der Einwärtsknickpunkt (15) ein Knickpunkt (14) eines Randabschnitts an einer Außenseite in Reifenquerrichtung an einem gebogenen Abschnitt (13) ist, der in Reifenquerrichtung nach innen vorsteht;
der Auswärtsknickpunkt (16) ein Knickpunkt (14) eines Randabschnitts an einer Innenseite in Reifenquerrichtung an einem gebogenen Abschnitt (13) ist, der in Reifenquerrichtung nach außen vorsteht;
der Abstand Ws ein positives Vorzeichen aufweist, wenn der Einwärtsknickpunkt (15) auf einer Außenseite in Reifenquerrichtung in Bezug auf den Auswärtsknickpunkt (16) angeordnet ist; und
der Abstand Ws ein negatives Vorzeichen aufweist, wenn der Einwärtsknickpunkt (15) auf einer Innenseite in Reifenquerrichtung in Bezug auf den Auswärtsknickpunkt (16) angeordnet ist.

## Revendications

1. Pneumatique (1) avec une direction de rotation désignée, comprenant :
une pluralité de rainures principales circonférentielles (10) formées dans une surface de bande de roulement (3) et s'étendant dans une direction circonférentielle de pneu ;
une pluralité de rainures de barrette (20) formées dans la surface de bande de roulement (3) et s'étendant dans une direction latérale de pneu ; et
une pluralité de blocs (30), chacun parmi la pluralité de blocs étant défini sur l'un et l'autre des côtés dans la direction circonférentielle de pneu par la pluralité de rainures de barrette (20) et comprenant au moins une extrémité dans la direction latérale de pneu définie par la pluralité de rainures principales
circonférentielles (10) ; dans lequel
la pluralité de rainures principales circonférentielles (10) sont cintrées de manière répétée et oscillent dans la direction latérale de pneu tout en s'étendant dans la direction circonférentielle de pneu ;
la pluralité de rainures de barrette (20), qui sont connectées à la pluralité de rainures principales circonférentielles (10) à partir de l'un et l'autre des côtés dans la direction latérale de pneu, sont situées au niveau de positions différentes dans la direction circonférentielle de pneu ;
**caractérisé en ce que**
une relation entre une distance Lf et une distance Lb se situe dans une plage de 1,1 ≤ (Lb/Lf) ≤ 1,2, où
une rainure circonférentielle principale transversale (11) est l'une parmi la pluralité de rainures principales circonférentielles (10) qui forme une partie transversale au niveau de laquelle la pluralité de rainures de barrette (20) est connectée à la pluralité de rainures principales circonférentielles (10) à partir d'un côté interne dans la direction latérale de pneu ;
une rainure de barrette transversale (21) est l'une parmi la pluralité de rainures de barrette (20) qui forme la partie transversale ;
un bloc transversal (31) est l'un parmi la pluralité de blocs (30) définis sur un côté interne dans la direction latérale de pneu par la rainure circonférentielle principale transversale (11) ;
un point d'intersection de ligne centrale (33) est un point d'intersection d'une ligne centrale (24) de la rainure de barrette transversale (21) dans une direction en largeur de rainure au niveau d'une position au niveau de laquelle la rainure de barrette transversale (21) est connectée à la rainure circonférentielle principale transversale (11) et à une partie de bord (32) du bloc transversal (31) sur un côté défini par la rainure circonférentielle principale transversale (11) ;
la distance Lf va du point d'intersection de ligne centrale (33) à une ligne centrale (25) d'une largeur de rainure de l'une parmi la pluralité de rainures de barrette (20) qui définit le bloc transversal (31) sur un côté avant dans une direction de rotation de pneu ; et
la distance Lb va du point d'intersection de ligne centrale (33) à une ligne centrale (26) d'une largeur de rainure de l'une parmi la pluralité de rainures de barrette (20) qui définit le bloc transversal (31) sur un côté arrière dans la direction de rotation de pneu.

2. Pneumatique selon la revendication 1, dans lequel
une relation entre une longueur Lbf et une longueur Lbb se situe dans une plage de 0,8 ≤ (Lbb/Lbf) ≤ 1,2 où
la longueur Lbf va du point d'intersection de ligne centrale (33) à une partie de la partie de bord (34) du bloc transversal (31) sur un côté avant dans la direction de rotation de pneu ; et
la longueur Lbb va du point d'intersection de ligne centrale (33) à une partie de la partie de bord (34) du bloc transversal (31) sur un côté arrière dans la direction de rotation de pneu.

3. Pneumatique selon la revendication 1 ou 2, dans lequel
la pluralité de rainures principales circonférentielles (10) ont une amplitude F dans la direction latérale de pneu dans une plage de 5,0 mm ≤ F ≤ 12,0 mm.

4. Pneumatique selon l'une quelconque des revendications 1 à 3, dans lequel la pluralité de rainures principales circonférentielles (10) ont une distance Ws dans la direction latérale de pneu dans une plage de -0,2 ≤ (Ws/Wg) ≤ 0,2 par rapport à une largeur moyenne de rainure Wg de la pluralité de rainures principales circonférentielles (10), où
la distance Ws va d'une position d'un point de cintrage vers l'intérieur (15) dans la direction latérale de pneu et une position d'un point de cintrage vers l'extérieur (16) dans la direction latérale de pneu ;
le point de cintrage vers l'intérieur (15) est un point de cintrage (14) d'une partie de bord sur un côté externe dans la direction latérale de pneu au niveau d'une partie cintrée (13) faisant saillie vers l'intérieur dans la direction latérale de pneu ;
le point de cintrage vers l'extérieur (16) est un point de cintrage (14) d'une partie de bord sur un côté interne dans la direction latérale de pneu au niveau d'une partie cintrée (13) faisant saillie vers l'extérieur dans la direction latérale de pneu ;
la distance Ws a un signe positif lorsque le point de cintrage vers l'intérieur (15) se situe sur un côté externe dans la direction latérale de pneu par rapport au point de cintrage vers l'extérieur (16) ; et
la distance Ws a un signe négatif lorsque le point de cintrage vers l'intérieur (15) se situe sur un côté interne dans la direction latérale de pneu par rapport au point de cintrage vers l'extérieur (16).
